# EUROPÄISCHE PATENTANMELDUNG

(11) **EP 1 790 692 A2**
(43) Veröffentlichungstag der Anmeldung: **30.05.2007**
(21) Anmeldenummer: 06021381.6
(22) Anmeldetag: 12.10.2006
(51) Int. Cl.: C08L 67/02

(54) **Formmassen auf Basis eines thermoplastischen Polyesters mit verbesserter Fliessfähigkeit**

(30) Priorität: 25.10.2005 DE 102005050957
(71) Anmelder: LANXESS Deutschland GmbH, 51369 Leverkusen (DE)
(72) Erfinder: Joachimi, Detlev, Dr., 47800 Krefeld (DE); Bienmüller, Matthias, Dr., 47803 Krefeld (DE); Endtner, Jochen, Dr., 50679 Köln (DE); Ulrich, Ralph, Dr., 40878 Ratingen (DE); Persigehl, Peter, Dr., Wuxi Jiangsu 214121 (CN); Klingelhöfer, Stefanie, Dr., 47809 Krefeld (DE); Joschek, Jens Peter, Dr., 51061 Köln (DE)

(57) **Zusammenfassung**

Diese Erfindung betrifft thermoplastische Formmassen mit verbesserter Fließfähigkeit auf Basis eines thermoplastischen Polyesters und eines Copolymerisats aus mindestens einem Olefin mit mindestens einem Methacrylsäureester oder Acrylsäureester eines aliphatischen Alkohols mit 1 bis 4 Kohlenstoffatomen, wobei der MFI des Copolymerisats 50 g/10 min nicht unterschreitet, ein Verfahren zur Herstellung dieser Formmassen, sowie die Verwendung dieser Formmassen zur Herstellung von Formteilen für die Elektro-, Elektronik-, Telekommunikations-, Kraftfahrzeug-, Computerindustrie, im Sport, in der Medizin, im Haushalt oder in der Unterhaltungsindustrie.

## Beschreibung

Diese Erfindung betrifft Formmassen auf Basis eines thermoplastischen Polyesters und mindestens eines Copolymerisats aus mindestens einem α-Olefin mit mindestens einem Methacrylsäureester oder Acrylsäureester eines aliphatischen Alkohols mit 1 bis 4 Kohlenstoffatomen, wobei der MFI (Melt Flow Index) des Copolymerisats 50 g/10 min nicht unterschreitet, ein Verfahren zur Herstellung dieser Formmassen sowie die Verwendung dieser Formmassen zur Herstellung von Formteilen für die Elektro-, Elektronik-, Telekommunikations-, Kraftfahrzeug-, Computerindustrie, im Sport, Haushalt, in der Medizin oder für die Unterhaltungsindustrie.

Hochfließfähige thermoplastische Zusammensetzungen sind für eine Vielzahl von Spritzgussanwendungen interessant. Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrücken bzw. Schließkräften der entsprechenden Spritzgießmaschinen möglich ist. Dies trifft auch auf das gleichzeitige Füllen von mehreren Spritzgussbauteilen über ein gemeinsames Angusssystem in sogenannten Vielfachwerkzeugen zu. Des Weiteren können häufig mit niederviskosen thermoplastischen Zusammensetzungen auch kürzere Zykluszeiten realisiert werden. Darüber hinaus sind gute Fließfahigkeiten gerade auch bei hochgefüllten thermoplastischen Zusammensetzungen beispielsweise mit Glasfaser- und/oder Mineralgehalten von über 40 Gew.-% sehr wichtig.

Trotz hoher Fließfähigkeit der thermoplastischen Zusammensetzungen werden jedoch hohe mechanische Anforderungen an die daraus herzustellenden Bauteile selber gestellt, so dass durch die Viskositätserniedrigung keine signifikante Beeinträchtigung der mechanischen Eigenschaften verursacht werden darf. Bedingt durch die Konstruktion der herzustellenden Bauteile ist es zunehmend häufig sogar so, dass die Anforderungen an die mechanischen Eigenschaften wie z. B. Schlagzähigkeit oder Randfaserdehnung höher sind als für Standard-Thermoplasten.

Es gibt mehrere Möglichkeiten, hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit, verbunden. Außerdem erfordert die Herstellung eines niederviskosen Polymerharzes auf einer bestehenden Polymerisationsanlage oftmals aufwändige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind aus der Literatur wie z. B. in Kunststoffe 2000, 90 (9), S. 116-118 bekannt und können beispielsweise Fettsäureester von Polyolen oder Amide aus Fettsäuren und Aminen sein. Derartige Fettsäureester, wie beispielsweise Pentaerythritoltetrastearat oder Ethylenglykoldimontanoat, sind jedoch mit polaren Thermoplasten wie Polyamiden, Polyalkylenterephthalaten oder Polycarbonaten nur begrenzt mischbar. Sie reichern sich an der Formteiloberfläche an und werden deshalb auch als Entformungshilfsmittel eingesetzt. Sie können zudem besonders bei höheren Konzentrationen bei Wärmelagerungen aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu den oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind literaturbekannt und können beispielsweise auf verzweigten Polyestern, Polyamiden, Polyesteramiden, Polyethern oder Polyaminen basieren, wie sie in Kunststoffe 2001, 91 (10), S. 179-190, oder in Advances in Polymer Science 1999, 143 (Branched Polymers II), S. 1-34 beschrieben sind.

EP 0 682 057 A1 beschreibt den Einsatz des stickstoffhaltigen 4-Kaskadendendrimers der ersten Generation: 1,4-Diaominobutan[4]propylamin (N,N' -tetrabis(3 -aminopropyl)-1,4-butandiamin) DAB(PA)₄ zur Erniedrigung der Viskosität in Polyamid 6, Polyamid 6,6 und Polybutylenterephthalat. Während beim Einsatz von DAB(PA)₄ zur Viskositätsemiedrigung in Polyamiden die Schlagzähigkeit der erhaltenen Formmassen praktisch unbeeinflusst bleibt (Unterschied < 5%), nimmt die Schlagzähigkeit bei PBT um mehr als 15% ab.

WO-A 98 27159 beschreibt die Zähigkeitsverbesserung von glasfaserverstärkten Polyestern oder Polycarbonaten durch Verwendung von zwei Copolymerisaten aus Ethen und Acrylaten, wobei ein Copolymer zusätzlich eine reaktive Epoxid- oder Oxiranfunktion trägt. Die Fließverbesserung der Formmassen ist ein Ziel der Erfindung, das beschriebene Vergleichssystem aus Polyester und dem Copolymerisat aus Ethen und Methylacrylat hat jedoch eine höhere Schmelzeviskosität als das reine Polyestersystem.

JP 01247454 beschreibt tieftemperaturzähe Mischungen von Polyestern mit einem Copolymerisat aus Ethen und einem nichtreaktiven Alkylacrylat mit einem MFI von 5,8 g / 10 min (bei 190°C, 2,16 kg) und einem Copolymerisat aus Ethen und einem Acrylat mit zusätzlicher reaktiver Gruppe. Die Fließverbesserung von Formmassen ist nicht Thema dieser Anmeldung.

EP-A 1 191 067 (= US 6 759 480) beschreibt die Zähmodifizierung von Thermoplasten, unter anderem von Polyamid und Polybutylenterephthalat durch eine Mischung aus einem Copolymerisat aus Ethen mit einem nichtreaktiven Alkylacrylat sowie einem Copolymerisat aus Ethen mit einem Acrylat mit zusätzlicher reaktiver Gruppe. Die Fließfähigkeit der Formmassen wird nicht diskutiert.

EP-A 0 838 501 (= US 6 020 414) beschreibt tieftemperaturzähe Mischungen von Verstärkungsstoffen und Polyestern mit einem Copolymerisat aus Ethen und einem nichtreaktiven Alkylacrylat sowie einem Copolymerisat aus Ethen und einem Acrylat mit zusätzlicher reaktiver Gruppe. Die beste Ausführungsform der Anmeldung wird dabei mit einem Copolymerisat aus Ethen und Methylacrylat erzielt. Die Fließverbesserung von Formmassen ist nicht Thema dieser Anmeldung.

WO-A 2 001 038 437 (AU 4 610 801 A) beschreibt Mischungen aus Polyester mit einem Kern-Schale-Kautschuk und zwei verschiedenen Copolymerisaten aus Ethen und Acrylaten mit und ohne zusätzlichen reaktiven Gruppen. Die Zähigkeit der Formmassen kann verbessert werden, die Fließfähigkeit auch der binären Mischungen aus Polyester und einem der genannten weiteren Bestandteile ist laut Tabelle 4 und Tabelle 9 für die verwendeten Mischungen nicht besser als für die reinen Polyester. Das verwendete Copolymerisat aus Ethen und 2-Ethyl-hexylacrylat hat einen MFI-Wert (MFI = Melt Flow Index) von 2 g/10 min (bei 190°C, 2,16 kg).

Die Aufgabe der vorliegenden Erfindung bestand nun darin, eine Erniedrigung der Viskosität von Polykondensatzusammensetzungen auf Basis thermoplastischer Polyester durch Additivierung der Polymerschmelze zu erreichen, ohne dabei Verluste bei Eigenschaften wie Schlagzähigkeit, Reißdehnung und Hydrolysebeständigkeit in Kauf nehmen zu müssen, wie dies beim Einsatz niederviskoser linearer Polymerharze oder bei literaturbekannten Additiven auftritt. Bezüglich Steifigkeit und Reißfestigkeit sollten sich die Zusammensetzungen auf Basis thermoplatischer Polyester möglichst nicht signifikant von den nicht additivierten Polykondensatzusammensetzungen auf Basis thermoplastischer Polyester unterscheiden, damit ein problemloser Austausch der Materialien für Kunststoftkonstruktionen auf Basis von thermoplastischen Polyestern ermöglicht wird.

Die Lösung der Aufgabe und somit Gegenstand der vorliegenden Erfindung sind thermoplastische Formmassen enthaltend
A) 99 bis 10 Gew.-Teile, bevorzugt 98 bis 30 Gew.-Teile, besonders bevorzugt 97 bis 60 Gew.-Teile mindestens eines thermoplastischen Polyesters, vorzugsweise eines Polyalkylenterephthalats und
B) 1 bis 20 Gew.-Teile, vorzugsweise 2 bis 15 Gew.-Teile, besonders bevorzugt 3 bis 9 Gew.-Teile mindestens eines Copolymerisats aus mindestens einem Olefin, bevorzugt einem α-Olefin und mindestens einem Methacrylsäureester oder Acrylsäureester eines aliphatischen Alkohols mit 1-4 Kohlenstoffatomen, wobei der MFI (Melt Flow Index) des Copolymerisats B) 50 g/10 min nicht unterschreitet und vorzugsweise zwischen 80 und 900 g/10 min liegt.

Der MFI (Melt Flow Index) wurde im Rahmen der vorliegenden Erfindung einheitlich bei 190°C und einem Prüfgewicht von 2,16 kg gemessen bzw. bestimmt.

Es wurde überraschend gefunden, dass Mischungen thermoplastischer Polyester und eines Copolymerisats von α-Olefinen mit Methacrylsäureestern oder Acrylsäureestern aliphatischer Alkohole mit 1 bis 4 Kohlenstoffatomen, die einen MFI von 50 g/10 min nicht unterschreiten, zur gewünschten Erniedrigung der Schmelzviskosität der daraus hergestellten erfindungsgemäßen Formmassen führen und die erfindungsgemäßen Formmassen dabei im Vergleich zu Formmassen ohne Copolymerisat keine Einbußen, sondern sogar deutliche Verbesserungen bei Eigenschaften wie Schlagzähigkeit, Randfaserdehnung, Hydrolysebeständigkeit, Dichte, Oberflächenqualität und Schwindung aufweisen. Die Formmassen sind zum Einsatz in der Dünnwandtechnologie hervorragend geeignet.

Als Komponente A) enthalten die thermoplastischen Formmassen erfindungsgemäß mindestens einen thermoplastischen Polyester, vorzugsweise teilaromatischen Polyester.

Die erfindungsgemäß als Komponente A) einzusetzenden thermoplastischen, bevorzugt teilaromatischen, Polyester sind ausgewählt aus der Gruppe der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalate und Polyethylenterephthalate, ganz besonders bevorzugt des Polybutylenterephthalats.

Unter teilaromatischen Polyestern versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-D1-(β-hydroxyethoxy)-benzol, 2,2-Bis-(4-hydroxycyclohexyl)-propan, 2,4-Dihydroxy-1,1,3,3 tetramethyl-cyclobutan, 2,2-bis-(3-β-hydroxyethoxyphenyl)-propan und 2,2-bis-(4-hydroxypropoxyphenyl)-propan (DE-A 24 07 674 (= US 4 035 958), DE-A 24 07 776, DE-A 27 15 932 (=US 4 176 224)).

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Beispiele für bevorzugte Verzweigungsmittel sind Trimesinsäure, Trimellitsäure, Trimethylolethan und -propan und Pentaerythrit.

Bevorzugt werden, nicht mehr als 1 Mol-% des Verzweigungsmittels, bezogen auf die Säurekomponente verwendet.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt werden (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt werden, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 cm³/g bis 1,0 cm³/g jeweils gemessen in Phenol/o-Dichlorbenzol (1:1 Gew.-Teile) bei 25°C.

Die erfindungsgemäß einzusetzenden thermoplastischen Polyester können auch im Gemisch mit anderen Polyestern und/oder weiteren Polymeren eingesetzt werden.

Den erfindungsgemäß einzusetzenden Polyestern können übliche Additive wie z.B. Entformungsmittel, Stabilisatoren und/oder Fließhilfsmittel in der Schmelze zugemischt oder auf der Oberfläche aufgebracht werden.

Als Komponente B) enthalten die erfindungsgemäßen Zusammensetzungen Coplymerisate, bevorzugt statistische Copolymerisate aus mindestens einem Olefm, bevorzugt α-Olefin und mindestens einem Methacrylsäureester oder Acrylsäureester eines aliphatischen Alkohols mit 1 bis 4 Kohlenstoffatomen, wobei der MFI des Copolymerisats B) 50 g / 10 min nicht unterschreitet und vorzugsweise zwischen 80 und 900 g/10 min liegt. In einer bevorzugten Ausführungsform besteht das Copolymerisat B) zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Geeignete Olefine, bevorzugt α-Olefine als Bestandteil der Copolymerisate B) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-l-penten. Besonders bevorzugte Olefine sind Ethen und Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) außschließlich über die Olefine in das Copolymer B) eingebracht.

Der Gehalt des Olefins am Copolymerisat B) liegt zwischen 50 und 95 Gew.-%, bevorzugt zwischen 61 und 93 Gew.-%.

Das Copolymerisat B) wird weiterhin definiert durch den zweiten Bestandteil neben dem Olefin. Als zweiter Bestandteil sind Alkylester der Acrylsäure oder Methacrylsäure geeignet, deren Alkylgruppe aus 1-4 Kohlenstoffatomen gebildet wird.

Beispielsweise kann die Alkylgruppe des Methacrylsäure- oder Acrylsäureesters ausgewählt sein aus der Gruppe umfassend Methyl, Ethyl, n-Propyl, i-Propyl, n-Butyl, s-Butyl, i-Butyl, t-Butyl. Ganz besonders bevorzugt weißt dieAlkylgruppe des Methacrylsäure- oder Acrylsäureesters 4 Kohlenstoffatome auf und umfasst die Gruppe n-Butyl, s-Butyl, i-Butyl und t-Butyl. Insbesondere bevorzugt ist der Acrylsäure-n-butylester.

Bevorzugt ist die Alkylgruppe des Methacrylsäure- oder Acrylsäureesters ausgewählt aus der Gruppe umfassend Ethyl, n-Propyl, i-Propyl, n-Butyl, s-Butyl, i-Butyl, t-Butyl.

Erfindungsgemäß besonders bevorzugt sind Copolymerisate B), bei denen das Olefin mit Acrylsäurebutylester copolymerisiert, insbesondere Acrylsäure-n-butylester wird.

Ebenfalls geeignet sind Mischungen der beschriebenen Acrylsäure- oder Methacrylsäureester. Bevorzugt ist hierbei die Verwendung von mehr als 50 Gew.-%, besonders bevorzugt mehr als 90 Gew.-% und ganz besonders bevorzugt die Verwendung von 100 Gew.-% Acrylsäurebutylester bezogen auf die Gesamtmenge an Acrylsäure- und Methacrylsäurester in Copolymerisat B).

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) ausschließlich über die Acrylsäure- oder Methacrylsäurester in das Copolymer B) eingebracht.

Der Gehalt der Acrylsäure- oder Methacrylsäureester am Copolymerisat B) liegt bevorzugt zwischen 5 und 50 Gew.-%, besonders bevorzugt zwischen 7 und 39 Gew.-%.

Geeignete Copolymerisate B) zeichnen sich neben der Zusammensetzung durch das niedrige Molekulargewicht aus. Dementsprechend sind für die erfindungsgemäßen Formmassen nur Copolymerisate B) geeignet, die einen MFI-Wert gemessen bei 190°C und einer Belastung von 2,16 6 kg von mindestens 50 g / 10 min, bevorzugt zwischen 80 und 900 g / 10 min aufweisen.

Geeignete Copolymerisate der Komponente B) können beispielsweise ausgewählt sein aus der Gruppe der von der Fa. Atofina (seit Oktober 2004 Arkema) unter dem Markennamen Lotryl^{®} angebotenen Materialien, die gewöhnlich als Schmelzkleber Verwendung finden.

In einer bevorzugten Ausführungsform können die erfindungsgemäßen thermoplastischen Formmassen zusätzlich zu den Komponenten A) und B) eine oder mehrere der Komponenten aus der Reihe C), D), E), F) oder G) enthalten.

In einer solchen bevorzugten Ausfiihrungsform können also zusätzlich zu den Komponenten A) und B) noch
C) 0,001 bis 70 Gew.-Teile, vorzugsweise 5 bis 50 Gew.-Teile, besonders bevorzugt 9 bis 47 Gew.-Teile eines Füll- und/oder Verstärkungsstoffes in den thermoplastischen Formmassen enthalten sein.

Es kann aber auch eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe als Komponente C) eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Wie bereits oben beschrieben, kann der Füllstoff und/oder Verstärkungsstoff gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeinen Formel (I)

(I) (X-(CH₂)_{q})ₖ-Si-(O-CᵣH₂ᵣ₊₁)₄₋ₖ

in der die Substituenten folgende Bedeutung haben:
X: NH₂-, HO-, 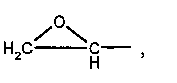
q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform können zusätzlich zu den Komponenten A) und B) und/oder C) noch
D) 0,001 bis 50 Gew.-Teile, vorzugsweise 9 bis 35 Gew.-Teile mindestens eines Flammschutzmittels in den thermoplastischen Formmassen enthalten sein.

Als Flammschutzmittel der Komponente D) können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122 (= CA 2 109 024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalinüd, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind z.B. die Phosphorverbindungen gemäß WO-A 98/17720 (= US 6 538 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, organische und anorganische Phosphinsäurederivate und deren Salze, insbesondere Metalldialkylphosphinate wie z.B. Aluminium-tris[dialkylphosphinate] oder Zink-bis[dialkylphosphinate], außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycouril-, Guanidin-Ammonium- und Melaminderivate, bevorzugt Allantoin, Benzoguanamin, Glykouril, Melamin, . Kondensationsprodukte des Melamins z.B. Melem, Melam oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide und Polyetherketone sowie Antitropfmittel wie Tetrafluorethylenpolymerisate zugesetzt werden.

In einer weiteren alternativen bevorzugten Ausführungsform können zusätzlich zu den Komponenten A) und B) und/oder C) und/oder D) noch
E) 0,001 bis 80 Gew.-Teile, bevorzugt 2 bis 40 Gew.-Teile, besonders bevorzugt 4 bis 19 Gew.-Teile mindestens eines Elastomermodifikators in den thermoplastischen Formmassen enthalten sein.

Die als Komponente E) einzusetzenden Elastomermodifikatoren umfassen ein oder mehrere Pfropfpolymerisate von
E.1 5 bis 95 Gew.-%, vorzugsweise 30 bis 90 Gew.%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

### Monomere E.1 sind vorzugsweise Gemische aus

E.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
E.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylinethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren E) einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E) sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff beschrieben sind. Der Gelanteil der Pfropfgrundlage E.2 beträgt mindestens 30 Gew.-%, vorzugsweise mindestens 40 Gew.-% (in Toluol gemessen).

Die Elastomermodifikatoren bzw. Pfropfcopolymerisate E) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2, die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren als Komponente E) eingesetzt werden, die Glasübergangstemperaturen < 10°C, vorzugsweise < 0°C, besonders bevorzugt < -20°C aufweisen. Hierzu können z.B. Elastomere mit einer Block-Copolymerstruktur gehören. Hierzu können weiterhin z.B. thermoplastisch aufschmelzbare Elastomere gehören. Beispielhaft und bevorzugt sind hier EPM-, EPDM- und / oder SEBS-Kautschuke genannt.

In einer weiteren alternativen bevorzugten Ausführungsform können zusätzlich zu den Komponenten A) und B), und/oder C) und/oder D) und/oder E) noch
F) 0,001 bis 80 Gew.-Teile, bevorzugt 10 bis 70 Gew.-Teile, besonders bevorzugt 20 bis 60 Gew.-Teile eines Polycarbonats in den thermoplastischen Formmassen enthalten sein.

Bevorzugte Polycarbonate sind solche Homopolycarbonate und Copolycarbonate auf Basis der Bisphenole der allgemeinen Formel (II),

HO-Z-OH (II)

worin Z ein divalenter organischer Rest mit 6 bis 30 C-Atomen ist, der eine oder mehrere aromatische Gruppen enthält.

Bevorzugt sind Bisphenole der Formel (III) 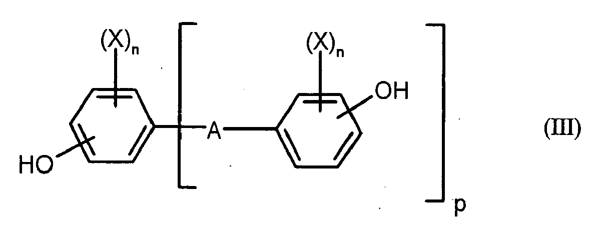 worin
- A: für eine Einfachbindung, C1-C5-Alkylen, C2-C5-Alkyliden, C5-C6-Cycloalkyliden, -0-, -SO-, -CO-, -S-, -SO2-, C6-C12-Arylen, an das weitere aromatische gegebenenfalls Heteroatome enthaltende Ringe kondensiert sein können, steht,
oder A für einen Rest der Formel (IV) oder (V) 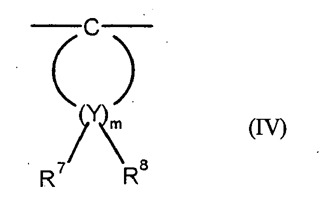 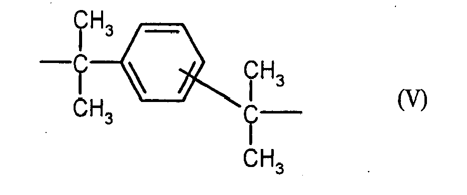 steht, worin
- X: für jeweils C₁-C₁₂-Alkyl, vorzugsweise Methyl, Halogen, vorzugsweise Chlor und/oder Brom steht,
- n: jeweils unabhängig voneinander für 0, 1 oder 2 steht,
- p: für 1 oder 0 steht,
- R⁷ und R⁸: für jedes Y individuell wählbar, unabhängig voneinander für Wasserstoff oder C₁-C₆-Alkyl, vorzugsweise Wasserstoff, Methyl oder Ethyl stehen,
- Y: für Kohlenstoff steht und
- m: für eine ganze Zahl von 4 bis 7, bevorzugt 4 oder 5 steht, mit der Maßgabe, dass an mindestens einem Atom Y, R⁷ und R⁸ gleichzeitig Alkyl sind.

Beispiele für Bisphenole gemäß der allgemeinen Formel (II) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (II).

Beispiele für Bisphenole gemäß der allgemeinen Formel (II) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5 -dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1, 1 -Bis-(3,5 -dimethyl-4-hydroxyphenyl)-cyclohexan, 1, 1 -Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1, 1 -Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Erfindungsgemäß besonders bevorzugt als Komponente F) einzusetzende Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (II) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sydney, 1964.

1,1-Bis-(4-hydroxyphenyl)-3,3,5-trimethylcyclohexan und seine Herstellung ist z.B. beschrieben in US-A 4 982 014.

Indanbisphenole können zum Beispiel aus Isopropenylphenol oder dessen Derivate oder aus Dimeren des Isopropenylphenols oder dessen Derivate in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (Mw), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenyhnethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α'α,"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2, 3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze.

Auch Copolycarbonate können verwendet werden. Copolycarbonate im Sinne der Erfindung sind insbesondere Polydiorganosiloxan-Polycarbonat-Blockcopolymere, deren Gewichtsmittel der molaren Masse (Mw) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt aromatischer Carbonatstruktur-einheiten in den Polydiorganosiloxan-Polycarbonat-Blockcopolymeren beträgt vorzugsweise 75 bis 97,5 Gew.-Teile, besonders bevorzugt 85 bis 97 Gew.-Teile. Der Gehalt an Polydiorganosiloxanstruktureinheiten in den Polydiorganosiloxan-Polycarbonat-Blockcopolymeren beträgt vorzugsweise 25 bis 2,5 Gew.-Teile, besonders bevorzugt 15 bis 3 Gew.-Teile. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pn = 5 bis 100, besonders bevorzugt Pn = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-Teile beträgt.

Solche Polydiorganosiloxan-Polycarbonat-Blockcopolymere sind dadurch gekennzeichnet, dass sie in der Polymerkette einerseits aromatische Carbonatstruktur-Einheiten (VI) und andererseits Aryloxyendgruppen-haltige Polydiorganosiloxane (VII) enthalten, 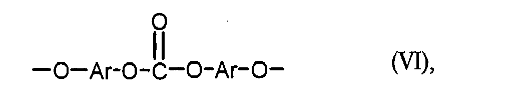 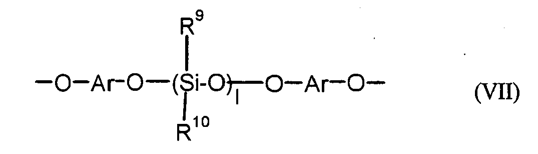 worin
- Ar: für gleiche oder verschiedene difunktionelle aromatische Reste steht und
- R⁹ und R¹⁰: gleich oder verschieden sind und für lineares Alkyl, verzweigtes Alkyl, Alkenyl, halogeniertes lineares Alkyl, halogeniertes verzweigtes Alkyl, Aryl oder halogeniertes Aryl, vorzugsweise Methyl stehen, bedeuten und
- I: für den mittleren Polymerisationsgrad von bevorzugt 5 bis 100, besonders bevorzugt 20 bis 80, steht.

Alkyl ist in vorstehender Formel (VII) vorzugsweise C₁-C₂₀-Alkyl, Alkenyl ist in vorstehender Formel (VII) vorzugsweise C₂-C₆-Alkenyl; Aryl ist in den vorstehenden Formeln (VI) oder (VII) vorzugsweise C₆-C₁₄-Aryl. Halogeniert bedeutet in den vorstehenden Formeln teilweise oder vollständig chloriert, bromiert oder fluoriert.

Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung gehören zum Stand der Technik und werden zum Beispiel in US-A 3 189 662 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sydney, 1964). Die als Edukte für diese Synthese verwendeten α,ω-Bishydroxyaryloxyendgruppen-haltige Polydiorganosiloxane und ihre Herstellung gehören zum Stand der Technik und werden zum Beispiel in US-A 3 419 634 beschrieben.

Den Polycarbonaten können übliche Additive wie z.B. Entformungsmittel, Stabilisatoren und/oder Fließmittel in der Schmelze zugemischt werden oder auf Ihrer Oberfläche aufgebracht werden. Bevorzugt enthalten die zu verwendenden Polycarbonate bereits Entformungsmittel vor der Compoundierung mit den anderen Komponenten der erfindungsgemäßen Formmassen.

In einer weiteren alternativen bevorzugten Ausführungsform können zusätzlich zu den Komponenten A) und B), und/oder C) und/oder D) und/oder E) und/oder F) noch
G) 0,001 bis 10 Gew.-Teile, bevorzugt 0,05 bis 5 Gew.-Teile, besonders bevorzugt 0,1 bis 3,5 Gew.-Teile weitere übliche Additive in den thermoplastischen Formmassen enthalten sein.

Übliche Additive der Komponente G) sind z.B. Stabilisatoren (zum Beispiel UV-Stabilisatoren, Thermostabilisatoren, Gammastrahlenstabilisatoren), Antistatika, Fließhilfsmittel, Entformungsmittel, weitere Brandschutzadditive, Emulgatoren, Nukleierungsmittel, Weichmacher, Gleitmittel, Farbstoffe,Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel phosphororganische Verbindungen, Phosphite, sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Pigmente können z.B. Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) eingesetzt werden. Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Komponente G) können ebenfalls Polyolefine, bevorzugt Polyethylen und / oder Polypropylen eingesetzt werden. Besonders bevorzugt sind niedermolekulare Polyethylen- bzw. Polypropylenwachse.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden

Erfindungsgemäß ergeben sich folgende bevorzugte Kombinationen der Komponenten
AB; A,B,C; A,B,D; A,B,E; A,B,F; A,B,G; A,B,C,D; A,B,C,E; A,B,C,F; A,B,C,G; A,B,D,E; A,B,D,F; A,B,D,G; A,B,E,F; A,B,E,G; A,B,F,G; A,B,C,D,E; A,B,C,D,F; A,B,C,D,G; A,B,C,E,F; A,B,C,E,G; A,B,C,F,G; A,B,E,F,G; A,B,D,E,F; A,B,D,E,G; A,B,D,F,G; A,B,C,D,E,F; A,B,C,D,E,G; A,B,D,E,F,G; A,B,C,E,F,G; A,B,C,D,F,G; A,B,C,D,E,F,G.

Die vorliegende Erfindung betrifft aber auch ein Verfahren zur Herstellung der erfindungsgemäßen thermoplastischen Formmassen. Dieses erfolgt nach bekannten Verfahren durch Mischen der Komponenten. Das Mischen der Komponenten erfolgt durch Vermischen der Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner die aus den erfindungsgemäßen Formmassen enthaltend
A) 99 bis 10 Gew.-Teile, bevorzugt 98 bis 30 Gew.-Teile, besonders bevorzugt 97 bis 60 Gew.-Teile mindestens eines thermoplastischen Polyesters, vorzugsweise eines Polyalkylenterephthalats und
B) 1 bis 20 Gew.-Teile, vorzugsweise 2 bis 15 Gew.-Teile, besonders bevorzugt 3 bis 9 Gew.-Teile mindestens eines Copolymerisats aus mindestens einem Olefin, bevorzugt α-Olefin mit mindestens einem Methacrylsäureester oder Acrylsäureester eines aliphatischen Alkohols mit 1 bis 4 Kohlenstoffatomen, wobei der MFI (gemessen bei 190 °C für 2,16 kg; DIN EN ISO 1133) des Copolymerisats B) 50 g/10 min nicht unterschreitet und vorzugsweise zwischen 80 und 900 g/10 min liegt,
herzustellenden Formteile und Formkörper.

Die erfindungsgemäßen Formmassen zeigen im Vergleich zu einer dem Stand der Technik entsprechenden Formmasse überraschenderweise folgende Vorteile:
- deutlich verbesserte Fließfähigkeit, insbesondere bei für Thermoplastverarbeitung relevanten Scherraten
- verbesserte Zähigkeit
- verbesserte Randfaserdehnung, insbesondere nach Hydrolyse
- geringere Dichte
- reduzierte Schwindung
- verbesserte Hydrolysebeständigkeit
- verbesserte Oberflächenqualität der Formteile

Die erfindungsgemäßen Formmassen können nach üblichen Verfahren, beispielsweise durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Die erfindungsgemäß aus den thermoplastischen Formmassen herzustellenden Formteile oder Halbzeuge können klein- oder großteilig sein und beispielsweise in der Kraftfahrzeug-, Elektro-, Elektronik-, Telekommunikations-, Informationstechnologie-, Computerindustrie, im Haushalt, Sport, in der Medizin oder der Unterhaltungsindustrie angewandt werden. Insbesondere können die erfindungsgemäßen Formmassen für Anwendungen eingesetzt werden, für die eine hohe Schmelzefließfähigkeit erforderlich ist. Ein Beispiel für derartige Anwendungen ist die sogenannte Dünnwandtechnologie, bei der die aus den Formmassen herzustellenden Formteile Wanddicken von weniger als 2,5 mm, bevorzugt weniger als 2,0 mm, besonders bevorzugt weniger als 1,5 mm und am meisten bevorzugt weniger als 1,0 mm aufweisen. Ein weiteres Beispiel für derartige Anwendungen ist die Zykluszeitverkürzung z.B. durch Absenkung der Verarbeitungstemperatur. Ein weiteres Anwendungsbeispiel ist die Verarbeitung der Formmassen über sogenannte Multiwerkzeuge, bei denen über ein Angusssystem mindestens 4 Formen, bevorzugt mindestens 8 Formen, besonders bevorzugt mindestens 12 Formen, am meisten bevorzugt mindestens 16 Formen in einem Spritzgussvorgang gefüllt werden.

### Beispiele: Komponente A:

Lineares Polybutylenterephthalat (Pocan^{®} B 1300, Handelsprodukt der Lanxess Deutschland GmbH, Leverkusen, Deutschland) mit einer Intrinsischen Viskosität von ca. 0,93 cm³/g (gemessen in Phenol : 1,2-Dichlorbenzol = 1:1 bei 25°C)

### Komponente B:

Copolymerisat aus Ethen und Acrylsäure-n-butylester mit einem Ethen-Anteil von 0-74 Gew.-% und einem MFI von 175 (Lotryl^{®} 28 BA 175 der Atofina Deutschland, Düsseldorf (seit Oktober 2004 Arkema GmbH)) [CAS-Nr. 25750-84-9]

### Komponente C:

Mit silanhaltigen Verbindungen beschlichtete Glasfaser mit einem Durchmesser von 10 µm (CS 7967, Handelprodukt der Lanxess N.V., Antwerpen, Belgien)

### Komponente G:

Als weitere Additive wurden die folgenden, für die Verwendung in thermoplastischen Polyestern gebräuchlichen Komponenten eingesetzt:
Nukleierungsmittel: Talkum [CAS-Nr. 14807-96-6] in Mengen von 0,01 bis 0,59 Gew.-%.
Thermostabilisator: Übliche Stabilisatoren auf Basis von Phenylphosphiten in Mengen von 0,01 bis 0,59 Gew.-%.
Entformungsmittel: Handelsübliche Fettsäureester in Mengen von 0,1 bis 0,68 Gew.%.

Die verwendeten weiteren Additive (Komponente G) stimmen für Vergleichsbeispiel und Beispiel jeweils in Art und Menge überein, und zwar mit G = 0,7 %.

Die Zusammensetzungen auf Basis von PBT wurden auf einem Zweiwellenextruder des Typs ZSK 32 (Werner und Pfleiderer) bei Massetemperaturen von 270 bis 275 °C zu Formmassen compoundiert, die Schmelze wurde in ein Wasserbad ausgetragen und anschließend granuliert.

Die Prüfkörper für die in der Tabelle aufgeführten Untersuchungen wurden auf einer Spritzgießmaschine des Typs Arburg 320-210-500 bei einer Massetemperatur von ca. 260 °C und einer Werkzeugtemperatur von ca. 80 °C verspritzt:
- Prüfstäbe 80 x 10 x 4 mm³ (gem. ISO 178)
- Platten 60 x 60 x 2 mm³ für die Schwindungsmessung nach ISO 294-4

Der Fülldruck ist der angussnah gemessene Werkzeuginnendruck, der aufgebracht wird, um die Werkzeugkavität zu füllen. Er ist in der Druckverlauikurve ein charakteristischer Knickpunkt zwischen der Formfüll- und Verdichtungsphase und lässt sich über die Prozessdatenerfassung ermitteln. Er wurde für Vergleichsbeispiel und Beispiel beim Spritzgießen von Flachstäben (80 x 10 x 4 mm³) bestimmt.

Bis auf die Viskositätsmessungen wurden alle Untersuchungen an o.g. Prüfkörpern durchgeführt.

Biegeversuch zur Ermittlung von Biegemodul, Biegefestigkeit und Randfaserdehnung nach DIN EN ISO 178.

Schlagzähigkeit: IZOD-Methode nach ISO 180 IU bei Raumtemperatur und bei -30 °C.

Schwindung: Zur Bestimmung der Schwindungseigenschaften werden normierte Platten der Dimension 60 mm x 60 mm x 2 mm (ISO 294-4) spritzgegossen. Durch anschließende Vermessung wird die Längs- und Querschwindung sowohl für die Verarbeitungs- als auch für die Nachschwindung ermittelt. Die Gesamtschwindung setzt sich aus der Verarbeitungsschwindung und der Nachschwindung additiv zusammen.

Die Dichtebestimmung erfolgte nach dem Auftriebsverfahren an Probekörpern nach DIN EN ISO 1183-1.

Die Bestimmung der Schmelzeviskosität wurde nach DIN 54811 / ISO 11443 bei der angegebenen Scherrate und Temperatur mit dem Gerät Viscorobo 94.00 der Fa. Göttfert nach Trocknung des Granulats bei 120 °C für 4 Stunden im Vakuumtrockner bestimmt.

### Hydrolyse:

Zur Messung der Hydrolysebeständigkeit wurden aus den erfindungsgemäßen Formmassen hergestellte Prüfkörper in einem Dampfsterilisator bei 100 °C und 100 % Feuchtigkeit gelagert. Nach fünf und nach zehn Tagen Hydrolyse wurden Schlagzähigkeitsmessung und Biegeversuch durchgeführt.

Oberfläche: Die Oberfläche wurde begutachtet und visuell eingeschätzt an Prüfkörpern der Dimensionen 60 mm x 60 mm x 2 mm. Entscheidend für die Beurteilung waren die Kriterien Glanz, Glätte, Farbe und einheitliche Struktur der Oberfläche.

**Tabelle**

| | | Vergleich | Beispiel |
|---|---|---|---|
| Komponente A | [%] | 69,3 | 64,3 |
| Komponente B | [%] | - | 5,0 |
| Komponente C | [%] | 30,0 | 30,0 |
| Komponente G | [%] | 0,7 | 0,7 |
| Fülldruck | [bar] | 207 | 179 |
| Schmelzviskosität (260 °C, 1000 s⁻¹) | [Pas] | 208 | 153 |
| Schmelzviskosität (260 °C, 1500 s-¹) | [Pas] | 176 | 125 |
| Schmelzviskosität (280 °C, 1000 s⁻¹) | [Pas] | 127 | 107 |
| Schmelzviskosität (280 °C, 1500 s⁻¹) | [Pas] | 109 | 89 |
| Izod-Schlagzähigkeit (ISO 180/1U, RT) | [kJ/m²] | 55 | 58 |
| Izod-Schlagzähigkeit (ISO 180/1U, RT) | [kJ/m²] | 25 | 37 |
| nach 5 Tagen Hydrolyse | | | |
| Izod-Schlagzähigkeit (ISO 180/1U, RT) | [kJ/m²] | 15 | 28 |
| nach 10 Tagen Hydrolyse | | | |
| Izod-Schlagzähigkeit (ISO 180/1U,-30 °C) | [kJ/m²] | 56 | 70 |
| Gesamtschwindung (1h/150 °C) | [%] | | |
| längs | | 0,48 | 0,45 |
| quer | | 1,30 | 1,09 |

| Biegeversuch: | | | |
|---|---|---|---|
| Biegefestigkeit | [MPa] | 217 | 196 |
| Randfaserdehnung bei Biegefestigkeit | [%] | 3,4 | 3,4 |
| Biegemodul | [MPa] | 9016 | 8316 |
| Biegeversuch nach 5 Tagen Hydrolyse: | | | |
| Biegefestigkeit | [MPa] | 158 | 169 |
| Randfaserdehnung bei Biegefestigkeit | [%] | 2,2 | 2,6 |
| Biegemodul | [MPa] | 8676 | 8055 |

| Biegeversuch nach 10 Tagen Hydrolyse: | | | |
|---|---|---|---|
| Biegefestigkeit | [MPa] | 121 | 138 |
| Randfaserdehnung bei Biegefestigkeit | [%] | 1,7 | 2,0 |
| Biegemodul | [MPa] | 8374 | 8005 |
| Dichte | [g/cm³] | 1,53 | 1,49 |
| Oberflächenqualität | | gut | sehr gut |

## Patentansprüche

1. Thermoplastische Formmassen enthaltend
A) 99 bis 10 Gew.-Teile mindestens eines thermoplastischen Polyesters und
B) 1 bis 20 Gew.-Teile mindestens eines Copolymerisats aus mindestens einem Olefin und mindestens einem Methacrylsäureester oder Acrylsäureester eines aliphatischen Alkohols mit 1 - 4 Kohlenstoffatomen; wobei der MFI des Copolymerisats B) 50 g/10 min nicht unterschreitet.

2. Thermoplastische Formmassen gemäß Anspruch 1, **dadurch gekennzeichnet, dass** der aliphatische Alkohol 4 Kohlenstoffatome umfasst.

3. Thermoplastische Formmassen gemäß der Ansprüche 1 und 2, **dadurch gekennzeichnet, dass** das Copolymerisat B) zu weniger als 4 Gew.-% aus Monomerbausteinen besteht, die weitere reaktive funktionelle Gruppen, ausgewählt aus der Gruppe umfassend Epoxide, Oxetane, Anhydride, Imide, Aziridine, Furane, Säuren, Amine, Oxazoline enthalten.

4. Thermoplastische Formmassen gemäß der Ansprüche 1 bis 3, **dadurch gekennzeichnet, dass** der MFI des Copolymerisats B) zwischen 80 und 900 g/10 min liegt.

5. Thermoplastische Formmassen gemäß der Ansprüche 1 bis 4, **dadurch gekennzeichnet, dass** diese zusätzlich zu A) und B) eine oder mehrere Komponenten der Reihe
C) 0,001 bis 70 Gew.-Teile mindestens eines Füll- oder Verstärkungsstoffes,
D) 0,001 bis 50 Gew.-Teile mindestens eines Flammschutzadditivs,
E) 0,001 bis 80 Gew.-Teile mindestens eines Elastomermodifikators,
F) 0,001 bis 80 Gew.-Teile eines Polycarbonats,
G) 0,001 bis 10 Gew.-Teile weitere übliche Additive enthalten.

6. Verfahren zur Herstellung der thermoplastischen Formmassen gemäß der Ansprüche 1 bis 5, **dadurch gekennzeichnet, dass** man die Komponenten in den entsprechenden Gewichtsanteilen vermischt.

7. Formteile oder Halbzeuge erhältlich durch Spritzguss oder Extrusion der Formmassen gemäß der Ansprüche 1 bis 5.

8. Verwendung der Formmassen gemäß der Ansprüche 1 bis 5 zum Einsatz in der Dünnwandtechnologie.

9. Multiwerkzeuge erhältlich durch Füllen von mindestens 4 Formen mit Formmassen gemäß den Ansprüchen 1 bis 5 in einem Spritzgussvorgang über ein Angusssystem.

10. Verwendung der Formteile oder Halbzeuge gemäß Anspruch 6 oder der Multiwerkzeuge gemäß Anspruch 9 in der Elektro-, Elektronik-, Telekommunikations-, Kraftfahrzeug-, Computerindustrie, im Sport, in der Medizin im Haushalt oder in der Unterhaltungsindustrie.
